# EUROPÄISCHE PATENTSCHRIFT

(11) **EP 2 098 553 B1**
(45) Veröffentlichungstag und Bekanntmachung des Hinweises auf die Patenterteilung: **17.08.2011**
(21) Anmeldenummer: 09002488.6
(22) Anmeldetag: 21.02.2009
(51) Int. Cl.: C08G 64/24

(54) **Verfahren zur Herstellung von Polycarbonat nach dem Phasengrenzflächenverfahren**
Method of manufacturing polycarbonate using the phase boundary method
Procédé destiné à la fabrication de polycarbonate selon le procédé de surfaces de limite de phases

(30) Priorität: 05.03.2008 DE 102008012613
(43) Veröffentlichungstag der Anmeldung: 09.09.2009
(73) Patentinhaber: Bayer MaterialScience AG, 51368 Leverkusen (DE)
(72) Erfinder: Ebert, Wolfgang, Dr., 47800 Krefeld (DE); Kords, Christian, 47829 Krefeld (DE); Bachmann, Rolf, Dr., 51469 Bergisch Gladbach (DE); Obendorf, Lars, Dr., 42799 Leichlingen (DE); Eynde, Johan Vanden, 9052 Zwijnaarde (Gent) (BE); Ruytinx, Bert, 3545 Halen (BE); Seeba, Johann, Dr., 51375 Leverkusen (DE)

(56) Entgegenhaltungen:
- EP-A- 0 101 007
- EP-A- 0 520 272
- DE-A1- 19 510 651

## Beschreibung

Die vorliegende Erfindung betrifft ein effizientes kontinuierliches Verfahren zur Herstellung von Polycarbonat nach dem Phasengrenzflächenverfahren sowie die Verwendung eines speziellen Dispergators zur Mischung der organischen und der wässrigen Phase in diesem Verfahren.

Die Polycarbonatherstellung nach dem Phasengrenzflächenverfahren ist bereits von Schnell, "Chemistry and Physics of Polycarbonates", Polymer Reviews, Volume 9, Interscience Publishers, New York, London, Sydney 1964, S. 33-70; D.C. Prevorsek, B.T. Debona und Y. Kesten, Corporate Research Center, Allied Chemical Corporation, Morristown, New Jersey 07960: "Synthesis of Poly(ester Carbonate) Copolymers" in Journal of Polymer Science, Polymer Chemistry Edition, Vol. 18, (1980)"; S. 75-90, D. Freitag, U. Grigo, P.R. Müller, N. Nouvertne', BAYER AG, "Polycarbonates" in Encyclopedia of Polymer Science and Engineering, Volume 1 1, Second Edition, 1988, S. 651-692 und schließlich von Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 beschrieben worden.

Des Weiteren wird auch in EP-A 0 517 044 oder EP-A 520 272 das Phasengrenzflächenverfahren zur Herstellung von Polycarbonat beschrieben.

Zur Herstellung von Polycarbonat nach dem Phasengrenzflächenverfahren erfolgt die Phosgenierung eines in wässrig-alkalischer Lösung oder Suspension vorgelegten Dinatriumsalzes eines Bisphenols oder eines Gemisches verschiedener Bisphenole in Gegenwart eines inerten organischen Lösungsmittels oder Lösungsmittelgemisches, welches neben der wässrigen eine zweite organische Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten auskondensiert, wobei das wobei das Molekulargewicht durch geeignete Kettenabbercher (monofunktionelle Phenole) kontrolliert werden kann. Die organische Phase wird schließlich abgetrennt und das Polycarbonat durch verschiedene Aufarbeitungsschritte daraus isoliert.

Kontinuierliche Verfahren zur Herstellung von Kondensaten unter Verwendung von Phosgen - beispielsweise die Herstellung von aromatischen Polycarbonaten, oder Polyestercarbonaten oder ihrer Oligomeren - nach dem Zweiphasen-Grenzflächenverfahren haben in der Regel den Nachteil, dass zur Beschleunigung der Reaktion und/oder Verbesserung der Phasentrennung mehr Phosgen eingesetzt werden muss, als für die Produktbilanz notwendig ist. Der Phosgen-Überschuss wird dann in der Synthese in Form von Nebenprodukten - beispielsweise zusätzliches Kochsalz oder Alkalicarbonat-Verbindungen - abgebaut. Typischerweise werden für das kontinuierliche Zweiphasen-Grenzflächenverfahren zur Herstellung von aromatischen Polycarbonaten nach dem Stand der Technik Phosgenüberschüsse um die 20 Mol-% bezogen auf das zugegebene Diphenolat eingesetzt (vgl. D. Freitag, U. Grigo, P.R. Müller, N. Nouvertne', BAYER AG, "Polycarbonates" in Encyclopedia of Polymer Science and Engineering, Volume 1 1, Second Edition, 1988, S. 651-692).

Bei einer Reduktion des Phosgenüberschusses treten unerwünschte Nebeneffekte wie eine schlechte Trennung der Dispersion nach dem letzten Reaktionsschritt, und damit erhöhte Wassergehalte in der organischen Lösung bzw. erhöhte Restmonomer oder Kettenabbrechergehalte im Abwasser auf. Verschiedene Methoden der Reduktion des Phosgenüberschusses werden in der Literatur diskutiert.

Aus der DE-A 2 725 967 geht die Lehre hervor, dass es für die Phosgenausbeute eines Verfahrens günstig ist, wässrige und organische Phase, die Phosgen enthält, zunächst in einem Rohr zusammenzuführen und dann in einen Reaktor vom Tanktyp einzuführen. Die Verweilzeit in diesem Rohr sollte zwischen 0,5 uns 15 Sekunden betragen. Der Phosgenüberschuss der Reaktion beträgt mehr als 10 Mol-%. Dieser reduzierte Phosgenüberschuss erfordert ein ungünstiges Phasenverhältnis von organischer Phase (d.h. Öl) zu Wasser, um nach Abschluss der Reaktion eine effektive Trennung der beiden Phasen zu erreichen. Nachteilig ist zudem die relativ hohe Verweilzeit für die Phosgenierung.

Aus der EP-A-304 691 ist bereits ein kontinuierliches Phasengrenzflächenverfahren zur Herstellung von Polycarbonaten bekannt. Hierbei wird eine wässrige Phase aus Diphenolen und der gerade notwendigen Menge Alkalihydroxid mit einer Phosgen enthaltenen organischen Phase in einem Rohr unter Verwendung eines statischen Mischers zusammengeführt. Der Phosgenüberschuss ist mit 20 bis 100 Mol% sehr hoch und die Verweilzeit im Reaktionsrohr für den ersten Reaktionsschritt liegt bei 10 bis 75 s. Mit diesem Verfahren können lediglich Prepolymere mit einem Molekulargewicht von 4000 bis 12000 g/mol hergestellt werden.

EP 0 517 044 A2 beschreibt die Reduktion des Phosgenüberschusses mittels eines Ringlochdüse und eines Strömungsrohrs, wobei gerade so viel Natronlauge verwendet wird, dass BPA noch gelöst bleibt. Diese Fahrweise erfordert eine aufwändige Regelung mit einer Messung der Chlorkohlensäureester-Gruppen mittels ATR-Kristall und einer geregelten Nachdosierung von Natronlauge um eine Übersäuern der Reaktionslösung zu verhindern. Weiterhin erfordert diese Reaktion ein Phasenverhältnis von Öl zu Wasser, dass sich eine Wasser-in-Öl-Dispersion bildet (Phasenverhältns Öl / Wasser größer 1). Die Verweilzeit im Strömungsrohr beträgt mindestens mehrere Sekunden.

Aus der EP 0 520 272 B1 geht hervor, dass ein geringer Phosgenüberschuss durch Split des Stroms der BPA-Lösung erreicht werden kann. Hierbei wird über eine Düse ein Teil der BPA-Lösung mit der Phosgenlösung gemischt, so dass in diesem Schritt ein Phosgenüberschuss von mindestens 20 Mol% eingesetztwird. Die Mischung reagiert dann in einem Strömungsrohr mit einer Mindestverweilzeit von 3 s weiter. Auch hier wird gefordert, dass die Dispersion eine Wasser in Öl-Dispersion ist. Der Nachteil des Verfahrens besteht unter anderem auch in dem erhöhten Aufwand der Dosierung eines zweiten BPA-Stroms.

Eine Reduktion des Phosgenüberschuss bei der Herstellung von Polycarbonat mittels Phasengrenzflächenverfahren konnte - sofern dies überhaupt möglich war - bisher daher lediglich mit für die spätere Trennung der beiden Phasen ungünstigen Phasenverhältnissen, aufwändiger Dosierung oder Regelungstechnik oder langen Verweilzeiten der Reaktanden in den Reaktionsvorrichtungen erreicht werden.

Eine Reduktion des Phosgenüberschuss bei der Herstellung von Polycarbonat mittels Phasengrenzflächenverfahren ist aber insofern von Bedeutung, als dass ein solches Verfahren einen deutlich geringeren Phosgenverlust durch nachträgliche Vernichtung des Überschusses zu verzeichnen hätte und zudem geringere Mengen an Nebenprodukten durch eben diese Vernichtung anfielen. Es bestand demnach weiterhin Bedarf nach einem Verfahren zur Herstellung von Polycarbonat mittels Phasengrenzflächenverfahren, bei dem der Phosgenüberschuss reduziert werden könnte ohne dass die vorangehend genannten nachteiligen Maßnahmen des Standes der Technik erforderlich wären.

Der vorliegenden Erfindung lag demnach die Aufgabe zugrunde, ein solches Verfahren bereitzustellen, bei dem mit einem möglichst reduzierten Phosgenüberschuss gearbeitet werden kann, bei dem die Nachteile des Standes der Technik nicht auftreten. Insbesondere sollte ein solches Verfahren eine effiziente nachträgliche Trennung der beiden Phasen ermöglichen.

Überraschend wurde gefunden, dass ein Verfahren zur Herstellung von Polycarbonat mittels Phasengrenzflächenverfahren, bei dem die wässrige und die organische Phase vor der Umsetzung mittels eines Dispergators vermischt werden und der Phosgenierungsschritt mit einer Verweilzeit von weniger als 0,5 s durchgeführt wird, die reduktion des Phosgenüberschusses bezogen auf die Summe der eingesetzten Dihydroxydiarylalkane auf 15 Mol-% oder weniger, bevorzugt 13 Mol% oder weniger, besonders bevorzugt 10 Mol% oder weniger ermöglichen.

Bei diesem Verfahren ist weder eine aufwändige Dosierung mittels zweier Diphenolströme noch eine aufwändige Regelungstechnik erforderlich. Das Verfahren hat aufgrund der extrem kurzen Verweilzeit des Phosgens in der Reaktionsvorrichtung weiterhin den Vorteil, dass das Phosgen in kurzer Zeit umgesetzt wird und der verbleibende, reduzierte Überschuss deutlich schneller der Vernichtung zugeführt werden kann. Dies hat sowohl in sicherheitstechnischer als auch in wirtschaftlicher Hinsicht Vorteile, da die Handhabung des giftigen Phosgens zeitlich erheblich limitiert, der Verlust nicht umgesetzten, d.h. im Überschuss zugegebenen Phosgens, sowie der Anfall von Nebenprodukten aus der Vernichtung von letzterem reduziert sind.

Gegenstand der vorliegenden Erfindung ist daher ein Verfahren zur kontinuierlichen Herstellung von Polycarbonaten mit mittleren Molekulargewichtsmitteln M_{w} von 15000 - 200000 g/mol nach dem Phasengrenzflächenverfahrens aus wenigstens einem Dihydroxydiarylalkan, Phosgen und wenigstens einem Katalysator gegebenenfalls in Gegenwart wenigstens eines Kettenabbrechers und/oder Verzweigers, dadurch gekennzeichnet, dass
(a) eine Mischung der organischen und wässrigen Phase erzeugt wird, indem in einem Dispergator kontinuierlich die organische Phase in die wässrige Phase oder die wässrige Phase in die organische Phase dispergiert wird, wobei die organische Phase wenigstens ein für das Polycarbonat geeignetes Lösungsmittel und ganz oder teilweise das Phosgen enthält und
   die wässrige Phase das oder die Dihydroxydiarylalkan(e), Wasser und Alkalilauge enthält, wobei zwischen 1.5 mol und 2.5 mol Alkalilauge pro mol Dihydroxydiarylalkan zugesetzt werden,
(b) anschließend die Mischung in einem Reaktor mit einer Verweilzeit von weniger als 0,5 s umgesetzt wird,
(c) anschließend die Reaktionsmischung unter Zugabe weiterer Alkalilauge und gegebenenfalls Kettenabhrecher(n) in einem weiteren Reaktor weiterreagieren gelassen wird und
(d) anschließend weitere Aufkondensation durch Zugabe von weiterer Alkalilauge, gegebenenfalls Kettenabbrecher(n) und wenigstens eines Katalysators in wenigstens einem weiteren Reaktor erfolgt.

Bei der Dispergierung der organischen Phase in die wässrige Phase oder der wässrigen Phase in die organische Phase mittels Dispergator kann eine Öl-in-Wasser- oder eine Wasser-in-Öl-Dispersion erzeugt werden, wobei unter Öl die organische Phase zu verstehen ist. Bevorzugt wird bei der Dispergierung eine Öl-in-Wasser-Dispersion erzeugt. Vorzugsweise wird mittels des Dispergators kontinuierlich die organische Phase in die wässrige Phase dispergiert.

Definitionsgemäß handelt es sich bei einer Öl-in-Wasser-Dispersion um eine solche, bei der Wasser die äußere (kontinuierliche) und Öl die innere (dispergierte) Phase bildet, d.h. Öltröpfchen in Wasser verteilt sind. Bei einer Wasser-in-Öl-Dispersion handelt es sich folglich um eine solche, bei der Öl die äußere und Wasser die innere Phase bildet.

Die organische Phase kann das erforderliche Phosgen vor der Dispergierung bereits ganz oder teilweise enthalten. Bevorzugt enthält die organische Phase vor der Dispergierung bereits das gesamte erforderliche Phosgen inklusive des verwendeten Phosgenüberschusses.

Der Eintrag des Phosgens in die organische Phase kann gasförmig oder flüssig erfolgen. Der verwendete Überschuss an Phosgen, bezogen auf die Summe der eingesetzten Dihydroxydiarylallcane beträgt bevorzugt lediglich 15 Mol% oder weniger, besonders bevorzugt 13 Mol-% oder weniger, ganz besonders bevorzugt 10 Mol% oder weniger. Vorzugsweise liegt der verwendete Überschuss an Phosgen, bezogen auf die Summe der eingesetzten Dihydroxydiarylalkane zwischen 3 und 15 Mol %, bevorzugt zwischen 3 und 13 Mol %, ganz besonders bevorzugt zwischen 5 und 10 Mol %.

Der pH-Wert der wässrigen Phase sollte über gegebenenfalls einmalige oder mehrfache Nachdosierung von Alkalilauge während und nach der Phosgendosierung im alkalischen Bereich bevorzugt zwischen 8,5 und 12 gehalten werden, während er nach der Katalysatorzugabe bei 10 bis 14 liegen sollte. Gegebenenfalls kann die Nachdosierung der Alkalilauge auch in Form entsprechender Nachdosierung von Dihydroxydiarylakan-Lösung in Alkalilauge erfolgen.

Die Phosgendosierung erfolgt vor der Mischung mit der wässrigen Phase ganz oder teilweise direkt in die organische Phase. Etwaige Teilmengen Phosgen können auch vor der Dispergierung in die wässrigen Phase oder aber nach der Dispergierung in die Dispersion eindosiert werden. Weiterhin kann das Phosgen ganz oder teilweise in einen rückgeführten Teilstrom des Synthesegemisches aus beiden Phasen dosiert werden, wobei dieser Teilstrom vorzugsweise vor der Katalysatorzugabe rückgeführt wird. In einer anderen Ausführungsform werden die beschriebene wässrige Phase mit der das Phosgen enthaltenden organischen Phase gemischt und anschließend nach einer Verweilzeit von weniger als 5 Sekunden dem oben erwähnten rückgeführten Teilstrom zugesetzt oder aber die beiden Phasen, die beschriebene wässrige Phase mit der das Phosgen enthaltenden organischen Phase werden direkt in dem oben erwähnten rückgeführten Teilstrom gemischt. Besonders bevorzugt erfolgt die vollständige Phosgendosierung vor der Mischung mit der wässrigen Phase direkt in die organische Phase. In allen diesen Ausführungsformen sind die oben beschriebenen pH-Wertbereiche zu beachten und gegebenenfalls durch einmalige oder mehrfache Nachdosierung von Natronlauge oder entsprechende Nachdosierung von Bisphenolatlösung einzuhalten. Ebenso muss der Temperaturbereich gegebenenfalls durch Kühlung oder Verdünnung eingehalten werden.

Die organische Phase kann aus einem oder Mischungen mehrerer Lösungsmittel bestehen. Geeignete Lösungsmittel sind aromatische und/oder aliphatische chlorierte Kohlenwasserstoffe, bevorzugt Dichlormethan, Trichlorethylen, 1,1,1-Trichlorethan, 1,1,2-Trichlorethan und Chlorbenzol und deren Gemische. Es können jedoch auch aromatische Kohlenwasserstoffe wie Benzol, Toluol, m-/p-/o-Xylol oder aromatische Ether wie Anisol allein, im Gemisch oder zusätzlich oder im Gemisch mit chlorierten Kohlenwasserstoffen verwendet werden, bevorzugt sind Dichlormethan und Chlorbenzol und deren Gemische. Eine andere Ausführungsform der Synthese verwendet Lösungsmittel welche Polycarbonat nicht lösen sondern nur anquellen. Es können daher auch Nichtlösungsmittel für Polycarbonat in Kombination mit Lösungsmitteln verwendet werden. Wobei dann als Lösungsmittel auch in der wässrigen Phase lösliche Lösungsmittel wie Tetrahydrofuran, 1,3- oder 1,4-Dioxan oder 1,3-Dioxolan verwendet werden können, wenn der Lösungsmittelpartner die zweite organische Phase bildet.

Geeignete Dihydroxydiarylalkane - vorangehend und im Folgenden unter anderem auch als Diphenol bezeichnet - sind solche der allgemeinen Formel,

HO-Z-OH

worin Z ein divalenter organischer Rest mit 6 bis 30 Kohlenstoffatomen ist, der eine oder mehrere aromatische Gruppen enthält. Beispiele solcher Verbindungen, die in das erfindungsgemäße Verfahren eingesetzt werden können sind Dihydroxydiarylalkane wie Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kennhalogenierte Verbindungen.

Bevorzugte Dihydroxydiarylalkane sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan (Bisphenol A (BPA)), 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-cyclohexyn und 1,1-Bis-(4-hydroxyphenyl)-3,3,5-trimethylcyclohexan (Bisphenol TMC).

Besonders bevorzugte Dihydroxydiarylalkane sind 4,4'-Dihydroxydiphenyl, 1,1-Bis-(4-hydroxyphenyl)-phenyl-ethan, 2,2-Bis-(4-hydroxyphenyl)-propan (Bisphenol A (BPA)), 2,2-Bis(3,5-dimethyl-4-hydroxyphenyl)-propan, 1, 1 -Bis-(4-hydroxyphenyl)-cyclohexan und 1,1-Bis-(4-hydroxyphenyl)-3,3,5-trimethylcyclohexan (Bisphenol TMC).

Diese und weitere geeignete Dihydroxydiarylalkane sind z.B. in den US-A 2 999 835, US-A 3,148,172 US-A 2,991,273, US-A 3 271 367, US-A 4,982,014 und US-A 2,999,846 in den deutschen Offenlegungsschriften DE-A 1 570 703, DE-A 2 063 050, DE-A 2 036 052, DE-A 2 211 956 und DE-A 3 832 396, der französischen Patentschrift FR-A 1 561 518, in der Monographie von H. Schnell, Chemistry and Physics of Polycarbonates, Interscience Publishers, New York 1964, S. 28ff; S.102ff und von D.G. Legrand, J.T. Bendler, Handbook of Polycarbonate Science and Technology, Marcel Dekker New York 2000, S. 72ff. beschrieben.

Im Falle der erfindungsgemäßen Herstellung von Homopolycarbonaten wird nur ein Dihydroxydiarylalkan eingesetzt, im Falle der erfindungsgemäßen Herstellung von Copolycarbonaten werden mehrere Dihydroxydiarylalkane eingesetzt, wobei selbstverständlich die verwendeten Dihydroxydiarylalkane, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Unter Alkalilauge ist im Rahmen der Erfindung bevorzugt Natronlauge, Kalilauge oder Mischungen aus diesen, besonders bevorzugt Natronlauge zu verstehen.

Die wässrige Phase in dem Phasengrenzflächenverfahren zur Herstellung des Polycarbonats enthält Alkalilauge, ein oder mehrere Dihydroxydiarylalkane und Wasser, wobei die Konzentration dieser wässrigen Lösung bezüglich der Summe der Dihydroxydiarylalkane, nicht als Alkalisalz sondern als freies Dihydroxydiarylalkan gerechnet, bevorzugt zwischen 1 und 30 Gew.-%, besonders bevorzugt zwischen 3 und 25 Gew.-%, ganz besonders bevorzugt zwischen 8 und 17 Gew.-% bezogen auf das Gesamtgewicht der wässrigen Phase beträgt. Die organische Phase in dem Phasengrenzflächenverfahren zur Herstellung des Polycarbonats enthält bevorzugt 12 bis 22 Gew. % Polycarbonate mit einem M_{w} von größer als 45000, bezogen auf das Gesamtgewicht der organischen Phase, und bevorzugt 12 bis 40 Gew.-%, besonders bevorzugt 15 bis 30 Gew.-% Polycarbonate mit einem M_{w} von 45000 oder kleiner, bezogen auf das Gesamtgewicht der organischen Phase. Dabei kann es bei höheren Konzentrationen notwendig sein, die Lösungen zu temperieren. Das zur Lösung der Dihydroxydiarylalkane verwendete Alkalihydroxid, z.B. Natrium- oder Kaliumhydroxid, kann fest oder als entsprechende wässrige Alkalilauge verwendet werden. Die Konzentration der Alkalilauge richtet sich nach der Zielkonzentration der angestrebten Dihydroxydiarylalkanlösung, liegt aber in der Regel zwischen 5 und 25 Gew.-%, bevorzugt 5 und 10 Gew.-% bezogen auf 100 %ige Alkalilauge, oder aber wird konzentrierter gewählt und anschließend mit Wasser verdünnt. Bei dem Verfahren mit anschließender Verdünnung werden Alkalilaugen mit Konzentrationen zwischen 15 und 75 Gew.-%, bevorzugt 25 und 55 Gew.-%, gegebenenfalls temperiert, verwendet. Der Alkaligehalt pro mol Dihydroxydiarylalkan ist von der Struktur des Dihydroxydiarylalkans abhängig, bewegt sich aber in der Regel von 1,5 mol Alkali / mol Dihydroxydiarylalkan bis 2,5 mol Alkali / mol Dihydroxydiarylalkan, bevorzugt von 1,8 bis 2,2 Mol Alkali / mol Dihydroxydiarylalkane und im besonders bevorzugten Fall, dass Bisphenol A als alleiniges Dihydroxydiarylalkan verwendet wird, von 1,85 bis 2,15 mol Alkali. Wird mehr als ein Dihydroxydiarylalkan verwendet, so können diese zusammen gelöst werden. Da die Löslichkeit von Dihydroxydiarylalkanen sehr stark von der verwendeten Alkalimenge abhängt, kann es jedoch vorteilhaft sein, statt einer Lösung mit zwei Dihydroxydiarylakanen besser zwei Lösungen mit je einem in einer geeigneten Alkalilauge gelösten Dihydroxydiarylalkan zu haben, die dann getrennt so dosiert werden, dass das richtige Mischungsverhältnis entsteht. Weiterhin kann es von Vorteil sein, das oder die Dihydroxydiarylalkan(e) nicht in Alkalilauge sondern in mit zusätzlichem Alkali ausgestatteter, verdünnter Dihydroxydiarylalkanelösung zu lösen. Die Lösevorgänge können von festem Dihydroxydiarylalkane, meist in Schuppen oder Prillform oder auch von geschmolzenem Dihydroxydiarylalkane ausgehen. Das eingesetzte Alkalihydroxid bzw. die Alkalilauge kann im Falle von Natriumhydroxid bzw. Natronlauge beispielsweise nach dem Amalgamverfahren oder dem sogenannten Membranverfahren hergestellt worden sein. Beide Verfahren werden seit langer Zeit benutzt und sind dem Fachmann geläufig. Bevorzugt wird im Falle von Natronlauge solche hergestellt nach dem Membranverfahren verwendet.

In einer solchen wässrigen Lösung und/oder der wässrigen Phase liegen das oder die Dihydroxydiarylalkan(e) ganz oder teilweise in Form der entsprechenden Alkalisalze bzw. Dialkalisalze vor.

Eine gegebenenfalls praktizierte Dosierung von Dihydroxydiarylalkan(en) nach oder während der Phosgeneinleitung kann so lange durchgeführt werden, wie Phosgen oder dessen unmittelbare Folgeprodukte, die Chlorkohlensäureester in der Reaktionslösung vorhanden sind.

Als Katalysatoren für das erfindungsgemäße Verfahren eignen sich bevorzugt tertiäre Amine, wie z.B. Triethylamin, Tributylamin, Trioctylamin, N-Ethylpiperidin, N-Methylpiperidin oder N-i/n-Propylpiperidin, quartäre Ammoniumsalze wie z.B. Tetrabutylammonium-, Tributylbenzylammonium-, Tetraethylammoniumhydroxid, -chlorid, -bromid, -hydrogensulfat oder -tetrafluoroborat sowie die den vorangehend genannten Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es wird eine Oniumverbindung - d.h. Ammonium- oder Phosphoniumverbindung - oder Gemische aus Oniumverbindungen als Katalysatoren verwendet. Im Falle einer solchen Oniumsalzkatalyse ist eine Zugabe vor der Phosgendosierung bevorzugt. Die Dosierung des Katalysators oder der Katalysatoren kann in Substanz, in einem inerten Lösungsmittel, vorzugsweise dem oder einem derer der organischen Phase bei der Polycarbonatsynthese, oder auch als wässrige Lösung erfolgen. Im Falle der Verwendung von tertiären Aminen als Katalysator kann beispielsweise deren Dosierung in wässriger Lösung als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt zwischen 0,001 bis 10 Mol %, bevorzugt 0,01 bis 8 Mol %, besonders bevorzugt 0,05 bis 5 Mol % bezogen auf Mole eingesetzte Dihydroxydiarylalkane.

Zur Regelung des Molekulargewichtes kann gegebenenfalls der Zusatz von einem oder mehreren monofunktionellen Kettenabbrecher(n), wie Phenol oder Alkylphenolen, insbesondere Phenol, p-tert.Butylphenol, iso-Octylphenol, Cumylphenol, deren Chlorkohlensäureester oder Säurechloride von Monocarbonsäuren bzw. Gemischen aus diesen Kettenabbrechern erforderlich sein. Solche Kettenabbrecher werden gegebenenfalls entweder mit dem oder den Dihydroxydiarylalkan(en) der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw. im Falle der Säurechloride und Chlorkohlensäureester als Kettenabbrecher solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, an oder zu dem kein Phosgen mehr vorliegt, aber der Katalysator noch nicht zudosiert wurde, d.h. sie können vor dem Katalysator, mit dem Katalysator zusammen oder parallel dazu zudosiert werden.

In der gleichen Weise können gegebenenfalls ein oder mehrere Verzweiger oder Verzweigermischungen der Synthese zugesetzt werden. Üblicherweise werden solche Verzweiger jedoch vor dem oder den Kettenabbrecher(n) zugesetzt. Beispielsweise werden als Verzweiger Trisphenole, Quarterphenole, Säurechloride von Tri- oder Tetracarbonsäuren oder auch Gemische der Polyphenole oder der Säurechloride verwendet.

Beispiele für als Verzweiger geeignete Verbindungen mit drei oder mehr als drei phenolischen Hydroxylgruppen sind Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Beispiele für sonstige als Verzweiger geeignete trifunktionelle Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Besonders bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Bei den im Rahmen dieser Anmeldung angegebenen mittleren Molekulargewichtsmittel handelt es sich um Gewichtsmittel (M_{w}), welche durch Gelpermeationschromotographie (GPC) (unter Verwendung von Polycarbonat-Standard) ermittelt wurden.

Die Synthese von Polycarbonaten aus Dihydroxydiarylalkanen und Phosgen im alkalischen Milieu ist eine exotherme Reaktion und wird erfindungsgemäß bevorzugt in einem Temperaturbereich von -5° C bis 100° C, besonders bevorzugt 15°C bis 80°C, ganz besonders bevorzugt 25 bis 65°C durchgeführt, wobei je nach Lösungsmittel oder Lösungsmittelgemisch gegebenenfalls unter Überdruck gearbeitet werden muss. Je nach verwendetem Reaktor kann bei unterschiedlichen Drücken gearbeitet werden. Beispielsweise kann bevorzugt bei einem Druck von 0,5 bis 20 bar (absolut) gearbeitet werden.

Die Durchführung der Polycarbonatsynthese erfolgt kontinuierlich. Die gesamte Reaktion, d.h. Umsetzung und weitere Aufkondensation, kann daher in Rührkesseln, Rohrreaktoren, Umpumpreaktoren oder Rührkesselkaskaden oder deren Kombinationen erfolgen, wobei durch Verwendung der bereits erwähnten Mischorgane sicherzustellen ist, dass wässrige und organische Phase sich möglichst erst dann entmischen, wenn das Synthesegemisch ausreagiert hat, d.h. kein verseifbares Chlor von Phosgen oder Chlorkohlensäureestern mehr enthalten ist. In einer bevorzugten Ausführungsform des erfindungsgemäßen Verfahrens wird Schritt (b) in einem Strömungsrohr durchgeführt. In einer solchen Anordnung lässt sich besonders vorteilhaft die extrem kurze Verweilzeit von weniger als 0,5 s der durchgeführten Mischung realisieren. In einer weiteren bevorzugten Ausführungsform des erfindungsgemäßen Verfahrens wird Schritt (c) in einem Umpumpreaktor durchgeführt. In einer weiteren bevorzugten Ausführungsform des erfindungsgemäßen Verfahrens wird Schritt (d) in einem Umpumpreaktor gefolgt von weiteren Verweilreaktoren durchgeführt.

Die beiden Phasen die das Reaktionsgemisch bilden, d.h. organische und wässrige Phase, werden erfindungsgemäß mittels eines Dispergators gemischt. Als Dispergatoren geeignet sind bevorzugt Düsen oder Strahldispergatoren, insbesondere solche, die eine Vorzugsrichtung der Dosierung gestatten. Im Rahmen der Erfindung geeignete Dispergatoren sind dem Fachmann bekannt und beispielsweise in EP-A 1 368 407 und EP-A 1 599 520 beschrieben.

Als Düsen kommen beispielsweise Spaltdüsen, Ringschlitzdüsen, Lochdüsen, Lefosdüsen oder Glattstrahldüsen in Frage.

Erfindungsgemäß geeignete Düsen können solche mit einem spezifischen Energieeintrag von vorzugsweise 0.02·e⁵ bis 5.0·e⁶ W/L (Watt/Liter), besonders bevorzugt 0.5·e⁵ bis 1·e⁶ W/l sein. Apparate dieser Art sind als Strahldispergatoren, Lochblendendispergatoren bzw. Hochdruck-Homogenisatoren bekannt.

Der anzuwendende Druck kann vorzugsweise 0.001 bis 1 MPa, besonders bevorzugt 0,001 bis 0,5 MPa betragen.

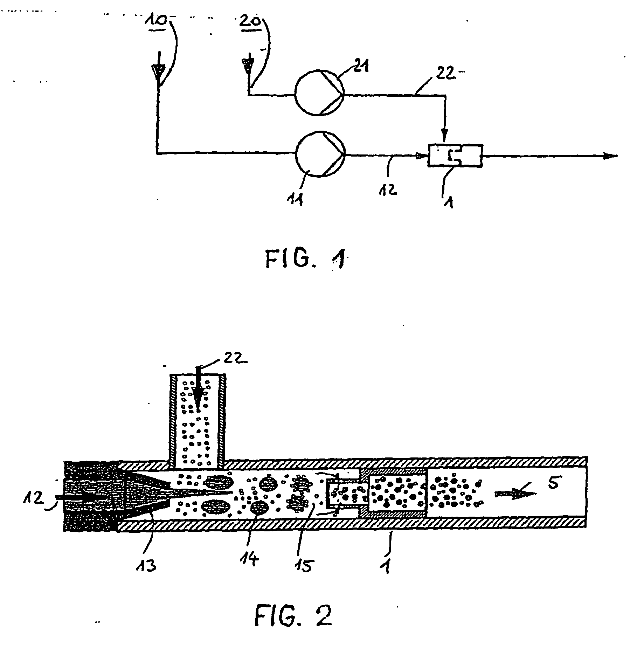

Fig. 1 beschreibt einen erfindungsgemäß bevorzugten Dispergator für den kontinuierlichen Betrieb. Über den Zulauf 20 wird mittels Pumpe 21 über Leitung 22 die wässrige oder organische Phase - vorzugsweise die wässrige Phase - dem Strahldispergator 1 zugeführt. Ferner wird über den Zulauf 10 mittels Pumpe 11 über Leitung 12 die jeweils andere Phase - organische oder wässrige Phase, vorzugsweise die organische Phase - zugeführt. Nach der Dispergierung im Strahldispergator 1 wird die Dispersion in den entsprechenden Reaktor, bevorzugt in ein Ströhmungsrohr geleitet (nicht in Fig. 1 dargestellt).
Fig. 2 zeigt eine vergrößerte Darstellung des Strahldispergators aus Fig. 1. Die wässrige oder organische Phase wird entlang Pfeil 22 in den Voremulgierraum 15 eingeführt. Die jeweils andere Phase wird in Richtung des Pfeils 12 durch die Vordispergierdüse 13 in den Vordispergierraum 15 eingeführt. Mit 14 sind große Tröpfchen der Phase bezeichnet, die in der anderen dispergiert wird. Nach Durchtritt durch den Strahldispergator verläßt die Dispersion den Strahldispergator in Richtung des Pfeiles 5.

Es können jedoch auch Dispergatoren mit deutlich geringerem anzuwendenden Druck betrieben werden. Dies wird erreicht, indem mehrere Bohrungen verwendet werden und/oder die Bohrungen größere Durchmesser aufweisen, so dass sich die gesamte Fläche aller Bohrungen erhöht. Die erforderliche Zahl und der Durchmesser der Bohrungen können über den Druckverlust berechnet werden. Solche Berechnungsmethoden sind in der Literatur beschieben und dem Fachmann bekannt.

In bevorzugten Ausführungsformen des erfindungsgemäßen Verfahrens werden solche Dispergatoren verwendet, worin die organische und die wässrige Phase vorzugsweise getrennt voneinander durch jeweils eine Pumpe einem Vordispergator zugeführt werden. Vorzugsweise beträgt der Druck dieser Pumpen jeweils maximal 2,5 MPa, vorzugsweise von 0,001 bis 0,5 MPa.

Anschließend erfolgt eine Homogenisierung der Vordispersion vorzugsweise in einer Homogenisierdüse ebenfalls bei einem Druck von maximal 2,5 MPa, vorzugsweise von 0,001 bis 0,5 MPa In bevorzugten Ausführungsformen des erfindungsgemäßen Verfahrens enthält der Dispergator demnach einen Vordispergator und eine Homogenisierdüse.

Als Vordispergator eignen sich alle beliebigen Düsen, wie z.B. Spaltdüsen, Ringschlitzdüsen, Lochdüsen, Lefosdüsen oder Glattstrahldüsen sowie Strahldispergatoren. Als Homogenisierdüsen eignen sich ebenfalls alle beliebigen Düsen, wie z.B. Spaltdüsen, Ringschlitzdüsen, Lochdüsen, Lefosdüsen oder Glattstrahldüsen sowie Strahldispergatoren.

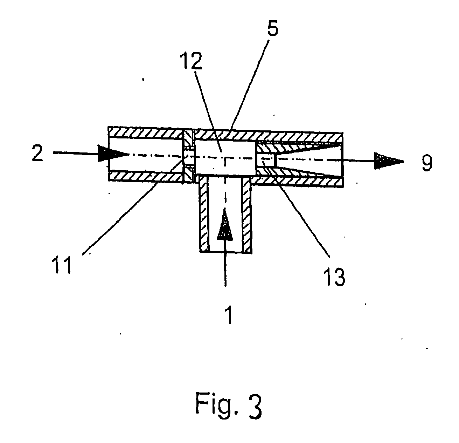

In Fig. 3 ist eine bevorzugte Ausführungsform eines Vordispergators 5 dargestellt, wie er zur Herstellung einer Vordispersion 9 aus wässriger und organischer Phase verwendet wird. Die organische Phase 2 wird in dem Mischer 5 über eine Düsenbohrung 11 in die wässrige Phase 1 in eine Vormischkammer 12 gedrückt. Die organische Phase 2 und die wässrige Phase 1 werden gemeinsam durch eine Düsenbohrung 13 gedrückt, wodurch eine Vordispersion 9 gebildet wird. Umgekehrt kann auch die wässrige Phase 1 in dem Mischer 5 in die organische Phase 2 gedrückt werden.

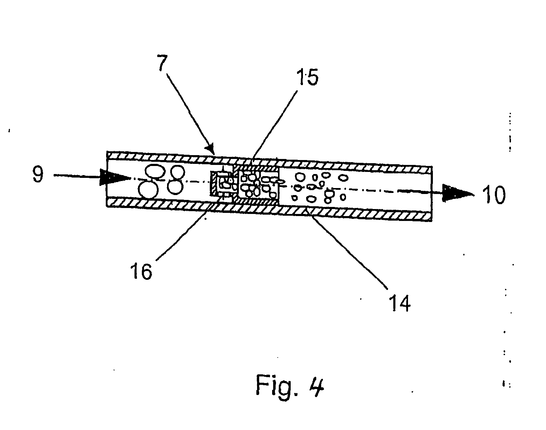

Fig. 4 zeigt eine bevorzugte Ausführungsform einer Homogenisierdüse. Gemäß Fig. 4 tritt die Vordispersion 9 in den als Strahldispergator ausgbildeten Homogenisierer (Homogenisierdüse) 7 ein, der aus einem Rohr und einem Einsatz 16 mit seitlichen Düsenbohrungen besteht. Die Vordispersion 9 wird durch die Düsenbohrungen gedrückt. Am gegenüberliegenden Ende tritt die Dispersion 10 aus dem Strahldispergator 7 aus. Ein solcher Strahldispergator ist aus DE-A 195 10 651 bekannt. Vorzugsweise kann es sich um einen solchen gemäß Fig. 2 handeln. Dem Prinzip nach ähnliche Strahldispergatoren können ebenso eingesetzt werden.

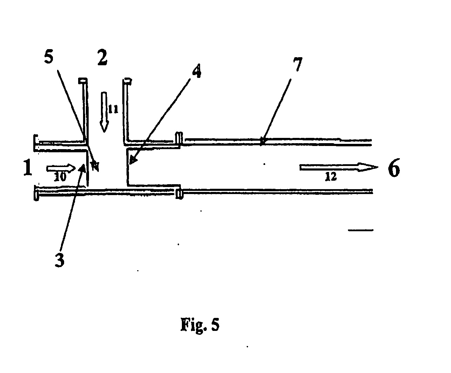

Fig. 5 zeigt eine bevorzugte Ausführungsform eines Dispergators, worin die wässrige Phase 2 in Richtung des Pfeils 11 und die organische Phase 1 in Richtung des Pfeils 10 durch eine Lochblende 3 in den Vordispergierraum 5 eingeführt werden. Das vordispergierte Zwei-Phasen-Gemisch - auch als Vordispersion bezeichnet - wird dann durch die Lochblende 4 gedrückt und so der weiteren Dispergierung (Homogenisierung) unterzogen. Die Dispersion 6 verlässt den Dispergator dann durch das Strömungsrohr 7 in Richtung des Pfeils 12.

Weiterhin Gegenstand der vorliegenden Erfindung ist die Verwendung von einem der vorangehend beschriebenen Dispergatoren zur Erzeugung einer Mischung aus organischer und wässriger Phase bei der Herstellung von Polycarbonat nach dem erfindungsgemäßen Verfahren.

Insbesondere eigenen sich hierfür solche Dispergatoren, mit welchen die erzeugte Mischung aus organischer und wässriger Phase eine Öl-in-Wasser-Dispersion ist.

Eine solche erfindungsgemäße Mischung der organischen und wässrigen Phase mittels solcher Dispergatoren ermöglicht unter anderem eine deutlich verkürzte Verweilzeit von weniger als 0,5 s, vorzugsweise sogar weniger als 250 ms der Mischung im Reaktor des Verfahrenschrittes (b) bei weiterhin hohem Reaktionsumsatz. Ein hoher Energieeintrag bei der Dispergierung der beiden Ströme (organische und wässrige Phase) bietet Vorteile, dahingehend dass dabei sehr kleine Tropfen, vorzugsweise von kleiner als 5 µm, gebildet werden können und das Phosgen in Zeiten unter 0,5 s, vorzugsweise unter 250 ms abreagiert. Dies ermöglicht sowohl die Verwendung kleiner Vorrichtungen (Reaktoren) für einen vollständigen Phosgenumsatz und verkürzt die Handhabungszeit dieses giftigen Reaktanden.

Das erfindungsgemäße Verfahren ermöglicht trotz des geringen Phosgenüberschusses am Ende der Reaktion eine gute Phasentrennung und sowohl geringen Wassergehalt in der organischen Phase als auch geringen Restmonomergehalt in der wässrigen Phase.

Zur Aufarbeitung des ausreagierten, höchstens noch Spuren, bevorzugt weniger als 2 ppm an Chlorkohlensäureestern enthaltende, mindestens zweiphasige Reaktionsgemisch lässt man zur Phasentrennung absitzen. Die wässrige alkalische Phase wird gegebenenfalls ganz oder teilweise zurück in die Polycarbonatsynthese als wässrige Phase geleitet oder aber der Abwasseraufarbeitung zugeführt, wo Lösungsmittel- und Katalysatoranteile abgetrennt und gegebenenfalls in die Polycarbonatsynthese rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z. B. der Chloralkalielektrolyse zugeführt werden kann, während die wässrige Phase gegebenenfalls wieder der Polycarbonatsynthese zugeführt wird.

Die organische, das Polycarbonat enthaltende Phase kann anschließend zur Entfernung der Kontaminationen alkalischer, ionischer oder katalytischer Art auf verschiedene, dem Fachmann bekannte Weisen gereinigt werden.

Die organische Phase enthält in der Regel auch nach einem oder mehreren Absetzvorgängen, gegebenenfalls unterstützt durch Durchläufe durch Absetzkessel, Rührkessel, Coalescer oder Separatoren bzw. Kombinationen aus diesen Maßnahmen - wobei gegebenenfalls Wasser in jedem oder einigen Trennschritten unter Umständen unter Verwendung von aktiven oder passiven Mischorganen zudosiert werden kann - noch Anteile der wässrigen alkalischen Phase in feinen Tröpfchen sowie des oder der Katalysator(en). Nach dieser groben Abtrennung der alkalischen, wässrigen Phase kann die organische Phase ein oder mehrmals mit verdünnten Säuren, Mineral-, Carbon- Hydroxycarbon-und/oder Sulfonsäuren gewaschen werden. Bevorzugt sind wässrige Mineralsäuren insbesondere Salzsäure, phosphorige Säure, Phosphorsäure oder Mischungen dieser Säuren. Die Konzentration dieser Säuren sollte dabei vorzugsweise im Bereich 0,001 bis 50 Gew. %, bevorzugt 0,01 bis 5 Gew. % liegen. Weiterhin kann die organische Phase mit entsalztem oder destilliertem Wasser wiederholt gewaschen werden. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen aus diesen Maßnahmen, wobei das Waschwasser zwischen den Waschschritten gegebenenfalls unter Verwendung von aktiven oder passiven Mischorganen zudosiert werden kann. Zwischen diesen Waschschritten oder auch nach der Wäsche können gegebenenfalls Säuren, vorzugsweise gelöst im Lösungsmittel welches der Polymerlösung zugrunde liegt, zugegeben werden. Bevorzugt werden hier Chlorwasserstoffgas, Phosphorsäure oder phosphorige Säure verwendet, die gegebenenfalls auch als Mischungen eingesetzt werden können. Die so erhaltene gereinigte Polycarbonatlösung sollte vorzugsweise nach dem letzten Trennvorgang nicht mehr als 5 Gew. %, bevorzugt weniger als 1 Gew. %, ganz besonders bevorzugt weniger als 0,5 Gew. % Wasser enthalten.

Die Isolierung des Polycarbonats aus der Lösung kann durch Verdampfen des Lösungsmittels mittels Temperatur, Vakuum oder eines erhitzten Schleppgases erfolgen. Andere Isolierungsmethoden sind beispielsweise Kristallisation und Fällung.

Erfolgt die Konzentrierung der Polycarbonatlösung und eventuell auch die Isolierung des Polycarbonats durch Abdestillieren des Lösungsmittels, gegebenenfalls durch Überhitzung und Entspannung, so spricht man von einem "Flash-Verfahren". Ein solches Verfahren ist dem Fachmann bekannt und beispielsweise in "Thermische Trennverfahren", VCH Verlagsanstalt 1988, S. 114 beschrieben. Wird statt dessen ein geheiztes Trägergas zusammen mit der einzudampfenden Lösung versprüht, so spricht man von einer "Sprühverdampfung/Sprühtrocknung", welche beispielhaft in Vauck, "Grundoperationen chemischer Verfahrenstechnik", Deutscher Verlag für Grundstoffindustrie 2000, 11.Auflage, S. 690 beschrieben ist. Alle diese Verfahren sind in der Patentliteratur und in Lehrbüchern beschrieben und dem Fachmann geläufig.

Bei der Entfernung des Lösungsmittels durch Temperatur (Abdestillieren) bzw. dem technisch effektiveren Flash-Verfahren erhält man hochkonzentrierte Polycarbonatschmelzen. Beim Flashverfahren werden Polymerlösungen wiederholt unter leichtem Überdruck auf Temperaturen oberhalb des Siedepunktes unter Normaldruck erhitzt und diese, bezüglich des Normaldruckes, überhitzten Lösungen anschließend in ein Gefäß mit niedrigerem Druck, z.B. Normaldruck, entspannt. Es kann dabei von Vorteil sein, die Aufkonzentrationsstufen, oder anders ausgedrückt die Temperaturstufen der Überhitzung nicht zu groß werden zu lassen, sondern lieber ein zwei- bis vierstufiges Verfahren zu wählen.

Aus den so erhaltenen hochkonzentrierten Polycarbonatschmelzen können die Reste des Lösungsmittels entweder direkt aus der Schmelze mit Ausdampfextrudern (vgl. z.B. BE-A 866 991, EP-A 0 411 510, US-A 4 980 105, DE-A 33 32 065), Dünnschichtverdampfern (vgl. z.B. EP-A 0 267 025), Fallfilmverdampfern, Strangverdampfern oder durch Friktionskompaktierung (vgl. z.B. EP-A 0 460 450), gegebenenfalls auch unter Zusatz eines Schleppmittels, wie Stickstoff oder Kohlendioxid oder unter Verwendung von Vakuum (vgl. z.B. EP-A 0 039 96, EP-A 0 256 003, US-A 4 423 207), entfernt werden, alternativ auch durch anschließende Kristallisation (vgl. z.B. DE-A 34 29 960) und/oder Ausheizen der Reste des Lösungsmittels in der festen Phase (vgl. z.B. US-A 3 986 269, DE-A 20 53 876). Auch diese Verfahren und die hierzu erforderlichen Vorrichtungen sind in der Literatur beschrieben und dem Fachmann geläufig.

Polycarbonat-Granulate können - wenn möglich - durch direktes Abspinnen der Schmelze und anschließender Granulierung oder aber durch Verwendung von Austragsextrudem von denen in Luft oder unter Flüssigkeit, meist Wasser, abgesponnen wird, erhalten werden. Werden Extruder verwendet, so kann man der Polycarbonatschmelze vor dem Extruder, gegebenenfalls unter Einsatz von statischen Mischern oder durch Seitenextruder in diesem Extruder, Additive zusetzen.

Alternativ kann die Polycarbonatlösung einer Sprühverdampfung unterzogen werden. Bei einer Versprühung wird die Polycarbonatlösung gegebenenfalls nach Erhitzung entweder in ein Gefäß mit Unterdruck verdüst oder mittels einer Düse mit einem erhitzten Trägergas, z.B. Stickstoff, Argon oder Wasserdampf in ein Gefäß mit Normaldruck verdüst. In beiden Fällen erhält man in Abhängigkeit von der Konzentration der Polymerlösung Pulver (verdünnt) oder Flocken (konzentriert) des Polymers, aus dem gegebenenfalls auch die letzten Reste des Lösungsmittels wie oben entfernt werden müssen. Anschließend kann mittels eines Compoundierextruders und anschließender Abspinnung Granulat erhalten werden. Auch hier können Additive, wie oben beschrieben, in der Peripherie oder dem Extruder selbst, zugesetzt werden. Oftmals kann es erforderlich sein, vor der Extrusion aufgrund der geringen Schüttdichte der Pulver und Flocken einen Kompaktierungsschritt für das Polymerpulver zu durchlaufen.

Aus der gewaschenen und gegebenenfalls noch aufkonzentrierten Polycarbonatlösung kann durch Zugabe eines Nichtlösungsmittels für Polycarbonat das Polymer weitgehend ausgefällt werden. Die Nichtlösungsmittel wirken dabei als Fällungsmittel. Hierbei ist es vorteilhaft, erst eine geringe Menge des Nichtlösungsmittels zuzugeben und gegebenenfalls auch Wartezeiten zwischen den Zugaben der Chargen an Nichtlösungsmittel einzulegen. Es kann außerdem von Vorteil sein, verschiedene Nichtlösungsmittels einzusetzen. Verwendung als Fällungsmittel finden hier z.B. aliphatische oder cycloaliphatische Kohlenwasserstoffe, insbesondere Heptan, i-Octan oder Cyclohexan, Alkohole wie z.B. Methanol, Ethanol oder i-Propanol, Ketone, wie z.B. Aceton, oder Mischungen aus diesen. Bei der Fällung wird in der Regel die Polymerlösung langsam dem Fällungsmittel zugesetzt. Die so erhaltenen Polycarbonate werden wie bei der Sprühverdampfung beschrieben zu Granulat verarbeitet und gegebenenfalls additiviert.

Nach anderen Verfahren werden Fällungs- und Kristallisations-Produkte oder amorph erstarrte Produkte in feinkörniger Form durch Überleiten von Dämpfen eines oder mehrer Nichtlösungsmittel für Polycarbonat, unter gleichzeitiger Erhitzung unterhalb der Glastemperatur kristallisiert und weiter zu höheren Molekulargewichten aufkondensiert. Handelt es sich dabei um Oligomere gegebenenfalls mit unterschiedlichen Endgruppen (Phenolische und Kettenabbrecherenden) so spricht man von Festphasenaufkondensation.

Der Zusatz von Additiven dient der Verlängerung der Nutzungsdauer oder der verbesserung der Farbstabilität (Stabilisatoren), der Vereinfachung der Verarbeitung (z.B. Entformer, Fließhilfsmittel, Antistatika) oder der Anpassung der Polymereigenschaften an bestimmte Belastungen (Schlagzähmodifikatoren, wie Kautschuke; Flammschutzmittel, Farbmittel, Glasfasern).

Diese Additive können einzeln oder in beliebigen Mischungen, zusammen oder in mehreren verschiedenen Mischungen der Polymerschmelze zugesetzt werden. Dies kann direkt bei der Isolierung des Polymeren oder aber nach Aufschmelzen von Granulat in einem sogenannten Compoundierungsschritt erfolgen. Dabei können die Additive beziehungsweise deren Mischungen als Feststoff, vorzugsweise als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Geeignete Additive sind beispielsweise beschrieben in "Additives for Plastics Handbook, John Murphy, Elsevier, Oxford 1999", im "Plastics Additives Handbook, Hans Zweifel, Hanser, München 2001".

Geeignete Antioxidantien bzw. Thermostabilisatoren sind beispielsweise:
Alkylierte Monophenole, Alkylthiomethylphenole, Hydrochinone und alkylierte Hydrochinone, Tocopherole, hydroxylierte Thiodiphenylether, Alkylidenbisphenole, O-, N- und S-Benzylverbindungen, hydroxybenzylierte Malonate, aromatische Hydroxybenzylverbindungen, Triazinverbindungen, Acylaminophenole, Ester von β-(3,5-Di-tert-butyl-4-hydroxyphenyl)propionsäure, Ester von β-(5-tert-Butyl-4-hydroxy-3-methylphenyl)propionsäure, Ester von β-(3,5-Dicyclohexyl-4-hydroxyphenyl)propionsäure, Ester von 3,5-Di-tert-butyl-4-hydroxyphenylessigsäure, Amide of β-(3,5-Di-tert-butyl-4-hydroxyphenyl)propionsäure, geeignete Thiosynergisten, sekundäre Antioxidantien, Phosphite, Phosphonite, Phosphonate und Phosphane, Benzofuranone oder Indolinone.

Bevorzugte Antioxidantien bzw. Thermostabilisatoren sind organische Phosphite, Phosphonate und Phosphane, meist solche bei denen die organischen Reste ganz oder teilweise aus gegebenenfalls substituierten aromatischen Resten bestehen.

Als Komplexierungsmittel für Schwermetalle und zur Neutralisation von Alkalispuren sind beispielsweise o- oder m-Phosphorsäuren, ganz oder teilweise veresterte Phosphate oder Phosphite geeignet.

Als Lichtschutzmittel (UV-Absorber) sind beispielsweise 2-(2'-Hydroxyphenyl)benzotriazole, 2-Hydroxybenzophenone, Ester von substituierten und unsubstituierten Benzoesäuren, Acrylate, sterisch gehinderte Amine, Oxamide, 2-(2-Hydroxyphenyl)-1,3,5-triazine oder substituierte Benztriazole geeignet, besonders bevorzugt sind substituierte Benztriazole.

Polypropylenglykole allein oder in Kombination mit z.B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polymer zugesetzt werden.

Außerdem können Verarbeitungshilfsmittel wie Entformungsmittel, wie beispielsweise Derivate langkettiger Fettsäuren, zugesetzt werden. Bevorzugt sind z.B. Pentaerythrittetrastearat und Glycerinmonostearat. Sie werden allein oder im Gemisch vorzugsweise in einer Menge von 0,02 bis 1 Gew.-%, bezogen auf die Masse der Zusammensetzung eingesetzt. Geeignete flammhemmende Additive sind Phosphatester, d.h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren. Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des Weiteren können Farbmittel, wie organische Farbstoffe oder Pigmente sowie anorganische Pigmente, IR-Absorber, einzeln, im Gemisch oder auch in Kombination mit Stabilisatoren, Glasfasern, Glas(hohl)kugeln oder anorganischen Füllstoffen zugesetzt werden.

Polycarbonatschmelzen, die durch Isolierung des Polymers oder durch Compoundierung erzeugt wurden, können durch einen Düsenkopf in Strangform abgesponnen, mit Gas, z.B. Luft oder Stickstoff, oder einer Kühlflüssigkeit, meist Wasser, abgekühlt und die erstarrten Stränge in handelsüblichen Granulatoren mit Schneiden die sich z.B. auf einer sich drehenden Walze befinden, in Luft, unter Schutzgas wie Stickstoff oder Argon oder unter Wasser granuliert werden. Je nach apparativer Ausführung entstehen dabei säulenförmige Granulate mit rundem oder elliptischem Querschnitt und rauher oder glatter Oberfläche. Die Schnittkanten können glatt sein oder glasartigen Bruch aufweisen mit ausgebrochenen Schnittkanten oder aber stehengebliebenen Resten an den Schnittkanten. Wünschenswert ist ein möglichst gleichmäßig geformtes Granulat mit möglichst wenig verbleibenden Überständen an den Schnittkanten. Weiterhin ist der Staubanteil im Granulat möglichst gering zu halten, bevorzugt unter 100 mg/kg Granulat. Der Durchmesser der Granulatkörner soll zwischen 0,5 mm und 10 mm, bevorzugt bei 1 bis 8 mm, besonders bevorzugt bei 3 bis 6 mm liegen. Während die Länge der Granulatkörner zwischen 1 bis 10 mm, bevorzugt zwischen 2 bis 8 mm und das Gewicht zwischen 10 und 50 mg bevorzugt zwischen 15 und 30 mg liegen sollte. Bevorzugt ist ein Granulat dessen Verhältnis von Durchmesser, bei elliptischem Querschnitt des mittleren Durchmessers, zur Länge 0,8 bis 1,2 beträgt, besonders bevorzugt eines mit dem Verhältnis von ca. 1. Diese Parameter unterliegen Größenverteilungen, bevorzugt sind möglichst enge Verteilungen, also möglichst gleichmäßig dimensionierte Granulate.

Abkühlung, Abspinnung, Granulierung und der anschließende Transport oder die Förderung des Granulates mit Gas oder Flüssigkeit, und die anschließende Lagerung, gegebenenfalls nach einem Durchmischungs- oder Homogenisierungsprozess, sind so zu gestalten, dass möglichst trotz der gegebenenfalls vorhandenen statischen Aufladung keine Verunreinigungen auf die Polymer-, Strang- oder Granulatoberfläche aufgebracht werden, wie beispielsweise Staub, Abrieb aus den Maschinen, aerosolartige Schmiermittel und andere Flüssigkeiten sowie Salze aus möglicherweise verwendeten Wasserbädern oder Kühlungen.

Die erfindungsgemäß hergestellten Polycarbonate eignen sich beispielsweise zur Herstellung von Extrudaten und Formkörpern, insbesondere solchen zur Verwendung im transparenten Bereich, ganz besonders im Bereich optischer Anwendungen wie z.B. Platten, Stegplatten, Verglasungen, Streuscheiben, Lampenabdeckungen oder optischer Datenspeicher, wie Audio-CD, CD-R(W), DVD, DVD-R(W), Minidiscs in ihren verschiedenen nur lesbaren oder aber einmalbeschreibbaren gegebenenfalls auch wiederholt beschreibbaren Ausführungsformen.

Weitere Anwendungen sind beispielsweise, ohne jedoch den Gegenstand der vorliegenden Erfindung einzuschränken:
1. Sicherheitsscheiben, die bekanntlich in vielen Bereichen von Gebäuden, Fahrzeugen und Flugzeugen erforderlich sind, sowie als Schilde von Helmen.
2. Folien
3. Blaskörper (s.a. US-A 2 964 794), beispielsweise 1 bis 5 Gallon Wasserflaschen.
4. Lichtdurchlässige Platten, wie Massivplatten oder insbesondere Hohlkammerplatten, beispielsweise zum Abdecken von Gebäuden wie Bahnhöfen, Gewächshäusern und Beleuchtungsanlagen.
5. Optische Datenspeicher, wie Audio CD's, CD-R(W)'s, DCD's, DVD-R(W)'s, Minidiscs und den Folgeentwicklungen
6. Ampelgehäuse oder Verkehrsschilder
7. Schaumstoffe mit offener oder geschlossener gegebenenfalls bedruckbarer Oberfläche
8. Fäden und Drähte (s.a. DE-A 11 37 167)
9. Lichttechnische Anwendungen, gegebenenfalls unter Verwendung von Glasfasern für Anwendungen im transluzenten Bereich
10. Transluzente Einstellungen mit einem Gehalt an Bariumsulfat und oder Titandioxid und oder Zirkoniumoxid bzw. organischen polymeren Acrylatkautschuken (EP-A 0 634 445, EP-A 0 269 324) zur Herstellung von lichtdurchlässigen und lichtstreuenden Formteilen.
11. Präzisionsspritzgussteile, wie Halterungen, z.B. Linsenhalterungen; hier werden gegebenenfalls Polycarbonate mit Glasfasern und einem gegebenenfalls zusätzlichen Gehalt von 1-10 Gew. % Molybdändisulfid (bez. auf die gesamte Formmasse) verwendet.
12. optische Geräteteile, insbesondere Linsen für Foto- und Filmkameras (DE-A 27 01 173).
13. Lichtübertragungsträger, insbesondere Lichtleiterkabel (EP-A 0 089 801) und Beleuchtungsleisten
14. Elektroisolierstoffe für elektrische Leiter und für Steckergehäuse und Steckverbinder sowie Kondensatoren.
15. Mobiltelefongehäuse.
16. Network interface devices
17. Trägermaterialien für organische Fotoleiter
18. Leuchten, Scheinwerferlampen, Streulichtscheiben oder innere Linsen.
19. Medizinische Anwendungen wie Oxygenatoren, Dialysatoren.
20. Lebensmittelanwendungen, wie Flaschen, Geschirr und Schokoladenformen.
21. Anwendungen im Automobilbereich, wie Verglasungen oder in Form von Blends mit ABS als Stoßfänger.
22. Sportartikel wie Slalomstangen, Skischuhschnallen.
23. Haushaltsartikel, wie Küchenspülen, Waschbecken, Briefkästen
24. Gehäuse, wie Elektroverteilerkästen
25. Gehäuse für elektrische Geräte wie Zahnbürsten, Föne, Kaffeemaschinen, Werkzeugmaschinen, wie Bohr-, Fräs-, Hobelmaschinen und Sägen
26. Waschmaschinen-Bullaugen
27. Schutzbrillen, Sonnenbrillen, Korrekturbrillen bzw. deren Linsen.
28. Lampenabdeckungen
29. Verpackungsfolien
30. Chip-Boxen, Chipträger, Boxen für Si-Wafer
31. Sonstige Anwendungen wie Stallmasttüren oder Tierkäfige.

Die folgenden Beispiele dienen der beispielhaften Erläuterung der Erfindung und sind nicht als Beschränkung aufzufassen.

### Beispiele

Im Folgenden wird als Dihydroxydiarylalkan 2,2'-bis-(4-hydroxyphenyl)-propan (Bisphenol A, BPA) eingesetzt, das Lösungsmittel der organischen Phase ist ein Gemisch aus 50 Gew.-% Methylenchlorid und 50 Gew.-% Monochlorbenzol.

### Beispiel 1 (erfindungsgemäß):

Als Vorrichtungen für die einzelnen Verfahrensschritte wurden verwendet:

| | |
|---|---|
| Verfahrensschritt (a): | Dispergator in Form einer Lochblendendüse mit einer Vordispergierung (mit einer Lochblende mit 5 Bohrungen mit jeweils 2,5 mm Durchmesser bei einer Dicke der Lochscheibe von 2,35 und einem Druckabfall von 0,2 bar bei 5,2 m/s Strömungsgeschwindigkeit), 26 ms Verweilzeit im Vordispergierraum und nachfolgender Dispergierung (mit einer weiteren Lochblende mit 18 Bohrungen mit jeweils 1,5 mm Durchmesser bei einer Dicke der Lochscheibe von 2,35 mm und 0,8 bar Druckabfall bei einer Strömungsgeschwindigkeit von 8,9 m/s) durch die eine Flüssigkeit in die andere dispergiert wird mit nachgeschaltetem Strömungsrohr mit 0,2 s Verweilzeit. |
| Verfahrensschritt (b): | Ein Umpumpreaktor ausgestattet mit einer Dosierstelle für NaOH-Lösung, einer Pumpe, einem Wärmetauscher, einem Überlaufbehälter und einer T-förmigen Entnahmestelle mit einem Volumen von 140 1, ausgestattet mit einer pH-und einer Leitfähigkeitssonde; bei Eintritt in den Umpumpreaktor erfolgt Redispergierung |
| Verfahrensschritt (c): | Eine Austragspumpe und ein Schlangenrohrreaktor mit Misch- und Verweilzonen und einem Gesamtvolumen von 60 1, |
| Verfahrensschritt (d): | Ein weiterer Schlangenrohrreaktor mit der gleichen Kapazität wie im Verfahrensschritt 3 mit einer Dosierstelle für Katalysator am Anfang des Reaktors und einem Gesamtvolumen von 801. |
| Nachträgliche Phasentrennung: | Trenngefäß (Größe 415 m³ bei einem Stand von 50%). |

Im Verfahrensschritt (a) wurden folgende Stoffströme eingesetzt:
750 kg/h BPA-Lösung (15.22 Gew.-% BPA, bezogen auf Gesamtgewicht der Lösung, 2.08 mol Natronlauge / mol BPA)
53.9 kg/h Phosgen
615.6 kg/h Lösungsmittelgemisch aus 50 Gew.-% Methylenchlorid und 50 Gew.-% Chlorbenzol

In Verfahrensschritt (b) wurden folgende Stoffströme zusätzlich eingesetzt:
9.3 kg/h NaOH-Lösung mit 15 Gew.-% NaOH

In Verfahrensschritt (c) wurden folgende Stoffströme zusätzlich eingesetzt:
53.0 kg/h NaOH-Lösung mit 15 Gew.-% NaOH,
35.1 kg/h t-Butylphenollösung (11.4 Gew.-%, in Lösungsmittelgemisch aus 50 Gew.-% Methylenchlorid und 50 Gew.-% Chlorbenzol)

In Verfahrensschritt (d) wurden folgende Stoffströme zusätzliche eingesetzt:
29.5 kg/h Katalysator (3 Gew.-%ige Lösung Ethylpipiridin in Lösungsmittelgemisch aus 50 Gew.-% Methylenchlorid und 50 Gew.-% Chlorbenzol

Die Temperatur im Umpumpreaktor betrug zwischen 42°C (nach dem Wärmetauscher) und 45°C (vor dem Wärmetauscher. Die Temperatur im Schlangenrohrreaktor in Verfahrensschritt (c) betrug 46°C, im Schlangenrohrreaktor in Verfahrensschritt (d) 45°C und im Trenngefäß 40°C.

Die Dispergierrichtung war so eingestellt, dass die organische Phase in die wässrige Phase dispergiert wurde.

Es wurde mit einem Phosgenüberschuss von 9,7 Gew.-% gearbeitet. Nach der Phasentrennung wurden folgende Werte ermittelt:

| | | |
|---|---|---|
| BPA im Abwasser | 1 | ppm |
| Wassergehalt in der organischen Phase nach Absetzen | 1.07 | Gew.-% |

Der geringe Wassergehalt in der organischen Phase sowie der geringe Restmonomergehalt BPA im Abwasser zeigten eine hervorragende Qualität der Phasentrennung. Zudem zeigte die Dispersion ein gutes und stabiles Trennverhalten.

### Beispiel 2 (erfindungsgemäß):

Es wurde apparativ wie unter Beispiel 1 gearbeitet mit dem Unterschied der Umkehrung der Dispergierrichtung, d.h. die wässrige Phase wurde in die organische Phase dispergiert.

Im Verfahrensschritt (a) wurden folgende Stoffströme eingesetzt:
754.9 kg/h BPA-Lösung (14.76 Gew.-% BPA bezogen auf Gesamtgewicht der Lösung, 2.11 mol Natronlauge / mol BPA)
54.3 kg/h Phosgen
612.2 kg/h Lösungsmittelgemisch aus 50 Gew.-% Methylenchlorid und 50 Gew.-% Chlorbenzol

In Verfahrensschritt (b) wurden folgende Stoffströme zusätzlich eingesetzt:
9.9 kg/h NaOH-Lösung mit 25 Gew.-% NaOH

In Verfahrensschritt (c) wurden folgende Stoffströme zusätzlich eingesetzt:
25.2 kg/h NaOH-Lösung mit 25 Gew.-% NaOH,
35.3 kg/h t-Butylphenollösung (11.4 Gew.-%, in Lösungsmittelgemisch aus 50 Gew.-% Methylenchlorid und 50 Gew.-% Chlorbenzol)

In Verfahrensschritt (d) wurden folgende Stoffströme zusätzliche eingesetzt:
28.02 kg/h Katalysator (3 Gew.-%ige Lösung Ethylpipiridin in Lösungsmittelgemisch aus 50 Gew.-% Methylenchlorid und 50 Gew.-% Chlorbenzol

Die Temperatur im Umpumpreaktor betrug zwischen 42°C (nach dem Wärmetauscher) und 45°C (vor dem Wärmetauscher. Die Temperatur im Schlangenrohrreaktor in Verfahrensschritt (c) betrug 46°C, im Schlangenrohrreaktor in Verfahrensschritt (d) 45°C und im Trenngefäß 40°C.

Es wurde mit einem Phosgenüberschuss von 13,0 Gew.-% gearbeitet. Nach der Phasentrennung wurden folgende Werte ermittelt:

| | | |
|---|---|---|
| BPA im Abwasser | 13 | ppm |
| Wassergehalt in der organischen Phase nach Absetzen | 2.5 | Gew.-% |

Trotz des höheren Restmonomergehalt BPA im Abwasser wurde mit einem immer noch sehr niedriger Wassergehalt in der organischen Phase eine qualitativ gute Phasentrennung beobachtet. Zudem zeigte die Dispersion ein gutes und stabiles Trennverhalten.

### Vergleichsbeispiel 3:

Anstelle des Dispergators wurde in Verfahrensschritt (a) zum Mischen der organischen mit der wässrigen Phase ein Mischkreuz eingesetzt, bei dem die beiden Ströme (wässrige und organische Phase) an gegenüberliegenden Stellen in den Umpumpreaktor eingebracht werden.

Im Verfahrensschritt (a) wurden folgende Stoffströme eingesetzt:
744.2 kg/h BPA-Lösung (14.88 Gew.-% BPA bezogen auf Gesamtgewicht der Lösung, 2.13 mol Natronlauge / mol BPA)
53.7 kg/h Phosgen
641.1 kg/h Lösungsmittelgemisch aus 50 Gew.-% Methylenchlorid und 50 Gew.-% Chlorbenzol

In Verfahrensschritt (b) wurden folgende Stoffströme zusätzlich eingesetzt:
9.8 kg/h NaOH-Lösung mit 25 Gew.-% NaOH

In Verfahrensschritt (c) wurden folgende Stoffströme zusätzlich eingesetzt:
25.27 kg/h NaOH-Lösung mit 25 Gew.-% NaOH,
33.7 kg/h t-Butylphenollösung (11.4 Gew.-%, in Lösungsmittelgemisch aus 50 Gew.-% Methylenchlorid und 50 Gew.-% Chlorbenzol)

In Verfahrensschritt (d) wurden folgende Stoffströme zusätzliche eingesetzt:
30.4 kg/h Katalysator (3 Gew.-%ige Lösung Ethylpipiridin in Lösungsmittelgemisch aus 50 Gew.-% Methylenchlorid und 50 Gew.-% Chlorbenzol

Die Temperatur im Umpumpreaktor betrug zwischen 42°C (nach dem Wärmetauscher) und 45°C (vor dem Wärmetauscher. Die Temperatur im Schlangenrohrreaktor in Verfahrensschritt (c) betrug 46°C, im Schlangenrohrreaktor in Verfahrensschritt (d) 45°C und im Trenngefäß 40°C.

Es wurde mit einem Phosgenüberschuss von 13,3 Gew.-% gearbeitet. Nach der Phasentrennung wurden folgende Werte ermittelt:

| | | |
|---|---|---|
| BPA im Abwasser | 18 | ppm |
| Wassergehalt in der organischen Phase nach Absetzen | 3.65 | Gew.-% |

Sowohl der Restmonomergehalt BPA im Abwasser als auch der Wassergehalt in der organischen Phase waren höher als bei erfindungsgemäßern Einsatz des Dispergators. Bei der Phasentrennung wurden zudem große Schwankungen im Trennverhalten und Instabilitäten beim Trennen beobachtet.

### Beispiele 4 -8:

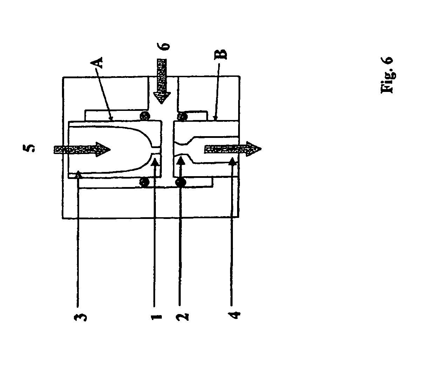

Zur Verfolgung der Wirkung des Dispergierers sowie des Ablaufes der Phosgenierung gemäß Verfahrensschritt (a) wurden weitere Versuche in einer Laboranlage mit einer Einlochdüse (gemäß Fig. 6) durchgeführt, und sowohl die Phosgenkonzentration als auch die Tröpfchengröße der dispergierten Phase in der Dispersion vermessen.
Fig. 6: Schematische Zeichnung der für Beispiele 4 - 8 als Dispergator verwendeten Einlochdüse

Fig. 6 zeigt die schematische Zeichnung der für Beispiele 4 - 8 als Dispergator verwendete Einlochdüse. Die kleine Bohrung 1 des oberen Teils A hat einen Durchmesser von 0,75 mm, die kleine Bohrung 2 im unteren Teil B einen Durchmesser von 1,05 mm. Der Durchmesser 3 des Rohrstücks im Oberteil A der Düse beträgt 2 mm, der Durchmesser 4 des Rohrstücks im unteren Teil B der Düse beträgt 3 mm.

Als wässrige Phase für die Beispiele 4 - 8 wurde eine 15 Gew.-% BPA-Lösung (bezogen auf Gesamtgewicht der Lösung) verwendet mit einem Molverhältnis NaOH / BPA von 2,1. Als Lösungsmittel für die organische Phase wurde ein Gemisch aus 50 Gew.-% Methylenchlorid und 50 Gew.-% Chlorbenzol verwendet, dem in den Beispielen 7 und 8 verschiedene Mengen Phosgen zugegeben wurden. Die Reaktionspartner wurden in der oben beschriebenen Düse dispergiert, wobei die Dispergierrichtung und damit die Voreinstellung der Dispersion (Öl-in-Wasser oder Wasser-in-Öl) von den Zuflüssen bestimmt wird (Die Phase des vertikalen oberen Stroms 5 wird in der des horizontalen seitlichen Stroms 6 dispergiert). Der Druckabfall über der Düse betrug während der Versuche etwa 1,5 bar. Die Reaktionsmischung wurde dann über eine Kapillare in eine Messkammer eingeführt. Die Gesamt-Verweilzeit in dieser Messkammer betrug 200 ms. Die Kammer wurde wahlweise mit einem ATR-Kristall zur Messung der Konzentrationen (Phosgen, Chlorkohlensäureester und Carbonatgruppen) oder mit einem Fenster zur optischen Bestimmung der Teichengrößenverteilung (d.h. Tröpfchengrößenverteilung) ausgestattet. Die Messungen erfolgten sowohl kontinuierlich im Durchfluss als auch nach Schließen der Ventile am Ende der Kammer (stopped flow technique).

Die Beispiele 4 - 6 dienten lediglich der Verfolgung der Tröpfchengrößenverteilung bewirkt durch den Dispergator. Die Beispiele 7 und 8 dienten der Quantifizierung des Reaktionsumsatzes während der äußerst kurzen Verweilzeit von 200 ms.

### Beispiel 4:

Ein Lösungsmittelstrom ohne Phosgen (155 g/min) und ein Strom wässrige BPA-Phase (200 g/min) wurden zusammengeführt, wobei die Dispergierrichtung so eingestellt war, dass eine Wasser-in-Öl-Dispersion gebildet wurde. Die Größe der dispergierten Tröpfchen betrug bei Durchströmung 46 µm (Sauterdurchmesser, d₃₂). Der Sauterdurchmesser is dem Fachmann bekannt und beispielsweise in Zlokarnik: "Rührtechnik, Theorie und Praxis" Springer Verlag 1999, S. 232 beschrieben. Er kann anhand bekannter Bildverarbeitungsmethoden mittels mikroskopischer Aufnahmen und Auszählung und Ausmessung der Teilchen ermittelt werden. Stabile Phasentrennung erfolgte nach 4 s.

### Beispiel 5:

Ein Lösungsmittelstrom ohne Phosgen (155 g/min) und ein Strom wässrige BPA-Phase (200 g/min) wurden zusammengeführt, wobei die Dispergierrichtung so eingestellt war, dass eine Öl-in-Wasser-Dispersion gebildet wurde. Die Größe der dispergierten Tröpfchen betrug bei Durchströmung 53 µm (Sauterdurchmesser, d₃₂). Stabile Phasentrennung erfolgte nach 2 s.

### Beispiel 6 (erfindungsgemäß):

Ein Lösungsmittelstrom mit Phosgen (190 g/min) und ein Strom wässrige BPA-Phase (220 g/min) mit einem molaren Verhältnis von Phosgen zu BPA von 1.09: 1 wurden zusammengeführt, wobei die Dispergierrichtung so eingestellt war, dass eine Öl-in-Wasser-Dispersion gebildet wurde. Es wurde eine sehr feine homogene Verteilung der Tropfen beobachtet. Die Größe der dispergierten Tröpfchen war bei Durchströmung unterhalb der Auflösungsgrenze von 5 µm des Mikroskops, d.h. kleiner als 5 µm (Sauterdurchmesser, d₃₂). Erst 250 ms nach Stoppen des Durchflusses betrug der Durchmesser der Tröpfchen 50 µm. 1 s nach dem Stopp der Strömung erfolgte schnelle Koaleszenz. Nach wenigen Minuten erfolgte stabile Phasentrennung.

Die Beispiele 4 - 6 zeigten, dass eine deutlich reduzierte Größe der dispergierten Teilchen bei einer Dispersion aus wässriger und organischer Phase nicht allein durch die Verwendung eines Dispergators bewirkt wird, sondern der überraschende Effekt der deutlichen Tröpfchenverkleinerung erst in Gegenwart von Phosgen beobachtet wird. Der vorteilhafte Effekt der vorherigen Verwendung eines Dispergators ist demnach bei der erfindungsgemäßen Umsetzung von Phosgen mit Dihydroxydiarylalkanen überraschend hoch.

### Beispiel 7 (erfindungsgemäß):

Dem organischen Strom wurde Phosgen mit einem Überschuss von 20 Mol.-% (bezogen auf die Stoffmenge des eingesetzten BPA) zugesetzt (365 g/min Durchfluss des organischen Stroms). Das Phasenverhältnis von organischer zu wässriger Phase betrug 1:1 (Volumenverhältnis). Nach 200 ms Verweilzeit in der Zuleitung zur Messkammer war kein Phosgen mehr detektierbar.

### Beispiel 8 (erfindungsgemäß):

Dem organischen Strom wurde Phosgen ohne Überschuss (bezogen auf die Stoffinenge des eingesetzten BPA) zugesetzt (360 g/min Durchfluss des organischen Stroms). Das Phasenverhältnis von organischer zu wässriger Phase betrug 0.84:1 (Volumenverhältnis). Nach 200 ms Verweilzeit in der Zuleitung zur Messkammer war kein Phosgen mehr detektierbar.

### Vergleichsbeispiel 9:

Es wurde eine Anordnung wie für die Beispiele 4 - 8 verwendet, allerdings ohne die in Fig. 6 dargestellte Düse. Die Zusammenführung der Ströme erfolgte über ein T-Stück.. Dem organischen Strom wurde Phosgen mit einem Überschuss von 20 Mol.-% (bezogen auf die Stoffmenge des eingesetzten BPA) zugesetzt (365 g/min Durchfluss des organischen Stroms). Das Phasenverhältnis von organischer zu wässriger Phase betrug 1:1 (Volumenverhältnis). Nach 200 ms Verweilzeit in der Zuleitung zur Messkammer waren noch 10 % des Phosgens detektierbar.

Die Beispiele 7 - 9 zeigen, dass die Verwendung des Dispergators zur deutlichen Verringerung des Gehalts an nicht umgesetztem Phosgen führt

## Patentansprüche

1. Verfahren zur kontinuierlichen Herstellung von Polycarbonaten mit mittleren Molekulargewichtsmitteln M_{w} von 15000 - 200000 g/mol nach dem Phasengrenzflächenverfahrens aus wenigstens einem Diphenol, Phosgen und wenigstens einem Katalysator gegebenenfalls in Gegenwart wenigstens eines Kettenabbrechers und/oder Verzweigers, **dadurch gekennzeichnet, dass**
(a) eine Mischung der organischen und wässrigen Phase erzeugt wird, indem in einem Dispergator kontinuierlich die organische Phase in die wässrige Phase oder die wässrige Phase in die organische Phase dispergiert wird, wobei
die organische Phase wenigstens ein für das Polycarbonat geeignetes Lösungsmittel und ganz oder teilweise das Phosgen enthält und
die wässrige Phase das oder die Diphenol(e), Wasser und Alkalilauge enthält, wobei zwischen 1.5 mol und 2.5 mol Alkalilauge pro mol Diphenol zugesetzt werden,
(b) anschließend die Mischung in einem Reaktor mit einer Verweilzeit von weniger als 0,5 s umgesetzt wird,
(c) anschließend die Reaktionsmischung unter Zugabe weiterer Alkalilauge und gegebenenfalls Kettenabbrecher(n) in einem weiteren Reaktor weiterreagiert und
(d) anschließend weitere Auflcondensation durch Zugabe von weiterer Alkalilauge, gegebenenfalls Kettenabbrecher(n) und in Gegenwart wenigstens eines Katalysators in wenigstens einem weiteren Reaktor erfolgt.

2. Verfahren gemäß Anspruch 1, **dadurch gekennzeichnet, dass** die im Dispergator erzeugte Mischung eine Öl-in-Wasser-Dispersion ist.

3. Verfahren gemäß Anspruch 1 oder 2, **dadurch gekennzeichnet, dass** die Umsetzung des oder der Diphenol(e) mit Phosgen bei Temperaturen von -5°C bis 100°C, bevorzugt von 15°C bis 80°C erfolgt.

4. Verfahren gemäß wenigstens einem der Ansprüche 1 bis 3, **dadurch gekennzeichnet, dass** der eingesetzte Überschuss an Phosgen bezogen auf die Summe der eingesetzten Diphenole 15 Mol-% oder weniger, bevorzugt 13 Mol-% oder weniger, besonders bevorzugt 10 Mol-% oder weniger beträgt.

5. Verfahren gemäß wenigstens einem der Ansprüche 1 bis 4, **dadurch gekennzeichnet, dass** als Diphenol(e) 4,4'-Dihydroxydiphenyl, 1,1-Bis-(4-hydroxyphenyl)-phenyl-ethan, 2,2-Bis-(4-hydroxyphenyl)-propan (Bisphenol A), 2,2-Bis(3,5-dimethyl-4-hydroxyphenyl)-propan, 1,1-Bis-(4-hydroxyphenyl)-cyclohexan oder 1,1-Bis-(4-hydroxyphenyl)-3,3,5-trimethylcyclohexan (Bisphenol TMC) eingesetzt werden.

6. Verfahren gemäß wenigstens einem der Ansprüche 1 bis 5, **dadurch gekennzeichnet, dass** als Dispergatoren Düsen oder Strahldispergatoren verwendet werden.

7. Verfahren gemäß wenigstens einem der Ansprüche 1 bis 6, **dadurch gekennzeichnet, dass** als Katalysator(en) ein oder mehrere Verbindungen aus der Gruppe der tertiären Amine, quartären Ammonium- oder Phosphoniumsalze verwendet werden.

8. Verwendung eines Dispergators enthaltend einen Vordispergator, eine Homogenisierdüse sowie mindestens drei Pumpen zur Erzeugung einer Mischung aus organischer und wässriger Phase bei der Herstellung von Polycarbonat nach dem Verfahren gemäß wenigstens einem der Ansprüche 1 bis 7.

9. Verwendung gemäß Anspruch 8, **dadurch gekennzeichnet, dass** die im Dispergator erzeugte Mischung eine Öl-in-Wasser-Dispersion ist.

## Claims

1. Process for the continuous preparation of polycarbonates with average molecular weight averages M_{w} of 15 000 - 200 000 g/mol by the phase boundary process from at least one diphenol, phosgene and at least one catalyst, optionally in the presence of at least one chain terminator and/or branching agent, **characterized in that**
(a) a mixture of the organic and aqueous phase is produced by continuously dispersing the organic phase in the aqueous phase or the aqueous phase in the organic phase in a dispenser,
the organic phase containing at least one solvent suitable for the polycarbonate and all or some of the phosgene and
the aqueous phase containing the diphenol(s), water and alkali solution, between 1.5 mol and 2.5 mol of alkali solution being added per mol of diphenol,
(b) the mixture is then reacted in a reactor with a residence time of less than 0.5 s,
(c) the reaction mixture is then reacted further in a further reactor with addition of further alkali solution and optionally chain terminator(s) and
(d) further condensation is then effected by addition of further alkali solution, and optionally chain terminator(s) and in the presence of at least one catalyst in at least one further reactor.

2. Process according to Claim 1, **characterized in that** the mixture produced in the disperser is an oil-in-water dispersion.

3. Process according to Claim 1 or 2, **characterized in that** the reaction of the diphenol(s) with phosgene is effected at temperatures of -5°C to 100°C, preferably of 15°C to 80°C.

4. Process according to at least one of Claims 1 to 3, **characterized in that** the excess of phosgene used, based on the sum of the diphenol(s) used, is 15 mol% or less, preferably 13 mol% or less, particularly preferably 10 mol% or less.

5. Process according to at least one of Claims 1 to 4, **characterized in that** 4,4'-dihydroxybiphenyl, 1,1-bis(4-hydroxyphenyl)phenylethane, 2,2-bis(4-hydroxyphenyl)propane (bisphenol A), 2,2-bis(3,5-dimethyl-4-hydroxyphenyl)propane, 1,1-bis(4-hydroxyphenyl)cyclohexane or 1,1-bis(4-hydroxyphenyl)-3,3,5-trimethylcyclohexane (bisphenol TMC) are used as diphenol(s).

6. Process according to at least one of Claims 1 to 5, **characterized in that** nozzles or jet dispersers are used as dispersers.

7. Process according to at least one of Claims 1 to 6, **characterized in that** one or more components from the group consisting of the tertiary amines and quarternary ammonium or phosphonium salts are used as catalyst(s).

8. Use of a disperser containing a predisperser, a homogenizing nozzle and at least three pumps for producing a mixture of organic and aqueous phase in the preparation of polycarbonate by the process according to at least one of Claims 1 to 7.

9. Use according to Claim 8, **characterized in that** the mixture produced in the disperser is an oil-in-water dispersion.

## Revendications

1. Procédé pour la production continue de polycarbonates présentant des poids moléculaires pondéraux moyens M_{w} 15 000-200 000 g/mole selon le procédé interfacial à partir d'au moins un diphénol, de phosgène et d'au moins un catalyseur, le cas échéant en présence d'au moins un agent d'interruption de chaîne et/ou agent de ramification, **caractérisé en ce que**
(a) on produit un mélange de la phase organique et de la phase aqueuse **en ce qu'**on disperse dans un appareil de dispersion en continu la phase organique dans la phase aqueuse ou la phase aqueuse dans la phase organique,
la phase organique contenant au moins un solvant approprié pour le polycarbonate et tout le phosgène ou une partie de celui-ci et
la phase aqueuse contenant le ou les diphénol(s), de l'eau et de la lessive alcaline, en ajoutant entre 1,5 mole et 2,5 moles de lessive alcaline par mole de diphénol,
(b) on transforme ensuite le mélange dans un réacteur pendant un temps de séjour de moins de 0,5 s,
(c) on continue ensuite la réaction du mélange réactionnel avec addition de lessive alcaline supplémentaire et le cas échéant d'un ou d'agent(s) d'interruption de chaîne dans un autre réacteur et
(d) une nouvelle condensation ayant ensuite lieu par addition de lessive alcaline supplémentaire, le cas échéant d'un ou d'agent(s) d'interruption de chaîne et en présence d'au moins un catalyseur dans au moins un autre réacteur.

2. Procédé selon la revendication 1, **caractérisé en ce que** le mélange produit dans l'appareil de dispersion est une dispersion huile-dans-eau.

3. Procédé selon la revendication 1 ou 2, **caractérisé en ce que** la transformation du ou des diphénol(s) avec du phosgène a lieu à des températures de -5°C à 100°C, de préférence de 15°C à 80°C.

4. Procédé selon au moins l'une quelconque des revendications 1 à 3, **caractérisé en ce que** l'excès utilisé de phosgène par rapport à la somme du ou des diphénol(s) utilisé(s) est de 15% en mole ou moins, de préférence de 13% en mole ou moins, de manière particulièrement préférée de 10% en mole ou moins.

5. Procédé selon au moins l'une quelconque des revendications 1 à 4, **caractérisé en ce qu'**on utilise comme diphénol(s) du 4,4'-dihydroxydiphényle, du 1,1-bis-(4-hydroxyphényl)-phényléthane, du 2,2-bis-(4-hydroxyphényl)-propane (Bisphénol A), du 2,2-bis(3,5-diméthyl-4-hydroxyphényl)-propane, du 1,1-bis-(4-hydroxyphényl)-cyclohexane ou du 1,1-bis-(4-hydroxyphényl)-3,3,5-triméthylcyclohexane (Bisphénol TMC).

6. Procédé selon au moins l'une quelconque des revendications 1 à 5, **caractérisé en ce qu'**on utilise comme appareils de dispersion des pulvérisateurs ou des appareils de dispersion à jets.

7. Procédé selon au moins l'une quelconque des revendications 1 à 6, **caractérisé en ce qu'**on utilise comme catalyseur(s) un ou plusieurs composés du groupe des amines tertiaires, des sels d'ammonium ou de phosphonium quaternaire.

8. Utilisation d'un appareil de dispersion contenant un appareil de prédispersion, un pulvérisateur d'homogénéisation ainsi qu'au moins trois pompes pour la production d'un mélange de phase organique et de phase aqueuse lors de la préparation de polycarbonate selon le procédé selon au moins l'une quelconque des revendications 1 à 7.

9. Utilisation selon la revendication 8, **caractérisée en ce que** le mélange produit dans l'appareil de dispersion est une dispersion huile-dans-eau.
